Europäisches Patentamt

European Patent Office

Office européen des brevets

(11) Publication number: **0 130 975**
**B1**

## EUROPEAN PATENT SPECIFICATION

(45) Date of publication of patent specification: 04.03.87

(51) Int. Cl.⁴: **G 06 K 13/103**

(21) Application number: 83900484.3

(22) Date of filing: 29.12.82

(86) International application number:
PCT/US82/01834

(87) International publication number:
WO 84/02596 05.07.84 Gazette 84/16

(54) SHEET FEEDING APPARATUS.

(43) Date of publication of application:
16.01.85 Bulletin 85/03

(45) Publication of the grant of the patent:
04.03.87 Bulletin 87/10

(84) Designated Contracting States:
DE FR GB

(56) References cited:
GB-A-1 040 655
US-A-3 360 099
US-A-3 790 162

(73) Proprietor: NCR Corporation
World Headquarters
Dayton, Ohio 45479 (US)

(72) Inventor: BASHFORD, Anthony, James
89 Hastings Court
Baden, Ontario NOB 1GO (CA)
Inventor: VANDENHAM, Elbert, Hendrik
516 Quiet Place, Unit 4
Waterloo, Ontario N2L 5A3 (CA)

(74) Representative: Robinson, Robert George
International Patent Department NCR Limited
206 Marylebone Road
London NW1 6LY (GB)

## Description

### Technical Field

This invention relates to a sheet feeding apparatus which has the purpose of orienting a sheet or document as it is moved towards a utilization device.

### Background Art

In certain document handling apparatuses, the documents are hand-fed, for example, into a track to be moved downstream in the track to a utilization device, such as a printer or encoder. In certain such utilization devices, it is necessary to orient a document so that its lowermost edge contacts the bottom of the track allowing printing or encoding to occur at a fixed distance above the lowermost edge of the document. In such operations it may be necessary that the orienting of the document be accomplished within a very short distance as measured along the downstream direction of the track. The present invention is especially adaptable for such an operation of application, although its use may be extended to other feeding operations.

A feeding apparatus including transferring equipment for changing the direction of movement of flat articles is disclosed in US—A—3,360,099. In this apparatus a first pair of rollers is provided for conveying the article in a first direction into a predetermined position, and a second pair of rollers is provided for conveying the article from the predetermined position in a second direction transverse to the first direction. One roller of each of the two pairs of rollers is mounted on a common carriage movable between a first and a second position to bring either one or the other roller into engagement with its respective roller pair to move an article positioned therebetween in the first or second direction respectively. In a practical embodiment described in the U.S. patent, sets of rollers are used instead of individual rollers and the arrangement becomes rather complex in its construction.

### Disclosure of the Invention

It is an object of the present invention to provide a feeding apparatus which orients a document using simple means and which is inexpensive to produce and easy to maintain.

Thus, according to the invention, there is provided a sheet feeding apparatus including transport means for moving a sheet in a first direction and thereafter moving the sheet in a second direction transverse to said first direction, said transport means including movable means movable between first and second positions and having a first member to cooperate with drive means to move the sheet in said first direction when said movable means is in its first position, and also having a second member to cooperate with drive means to move the sheet in said second direction when said movable means is in its second position, characterized in that said drive means comprises a rotatable member having a rotatable substantially planar surface with which said first and second members are arranged to cooperate to move the sheet.

An advantage of the apparatus of the invention is that it uses only a few moving parts to achieve proper orientation of a document.

Another advantage is that the velocity of feed may be controlled by a simple mechanical adjustment of the position of the first and second members of the transport means.

An advantage of the apparatus according to the preferred embodiment of the present invention is that it orients a document or sheet by having the lower edge of the sheet contact the "bottom" of the track before it is advanced in a downstream direction.

### Brief Description of the Drawings

One embodiment of the invention will now be described, by way of example, with reference to the accompanying drawings, in which:

Fig. 1 is a plan view showing a preferred embodiment of this invention, having a rotatable member and a toggle member which is movable between first and second positions with regard to the rotatable member;

Fig. 2 is an elevational view of this invention when looking in an upstream direction as viewed from line 2—2 of Fig. 1;

Fig. 3 is a cross-sectional view, taken along the line 3—3 of Fig. 1, to show additional details of means for feeding the documents or sheets in a downstream direction;

Fig. 4 is a schematic diagram, in block form, showing a control means which may be used with this invention; and

Fig. 5 is a general perspective view of the toggle member shown in Figs. 1 and 2.

### Best Mode for Carrying Out the Invention

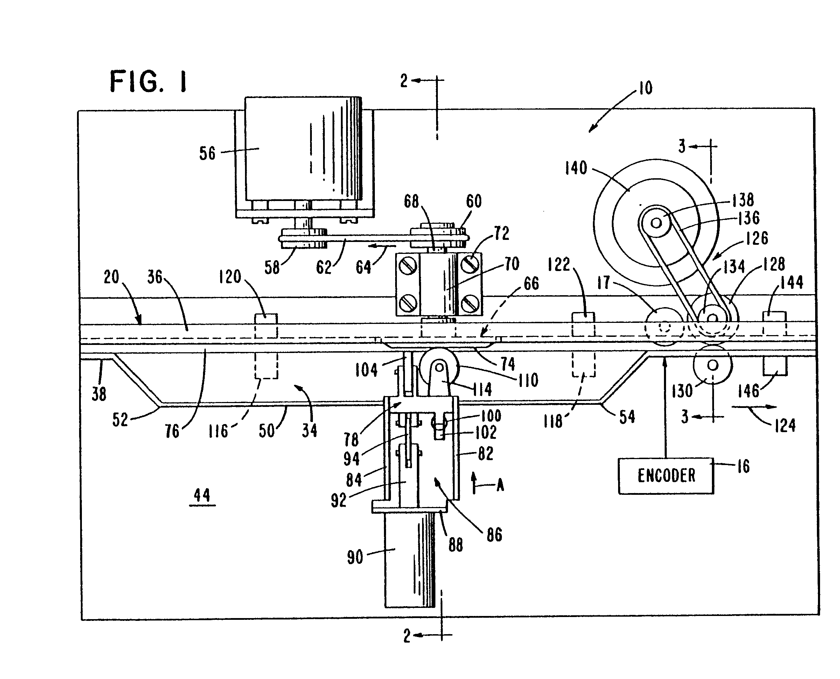

Fig. 1 is a plan view of a preferred embodiment of the sheet feeding apparatus of this invention which is designated generally as 10.

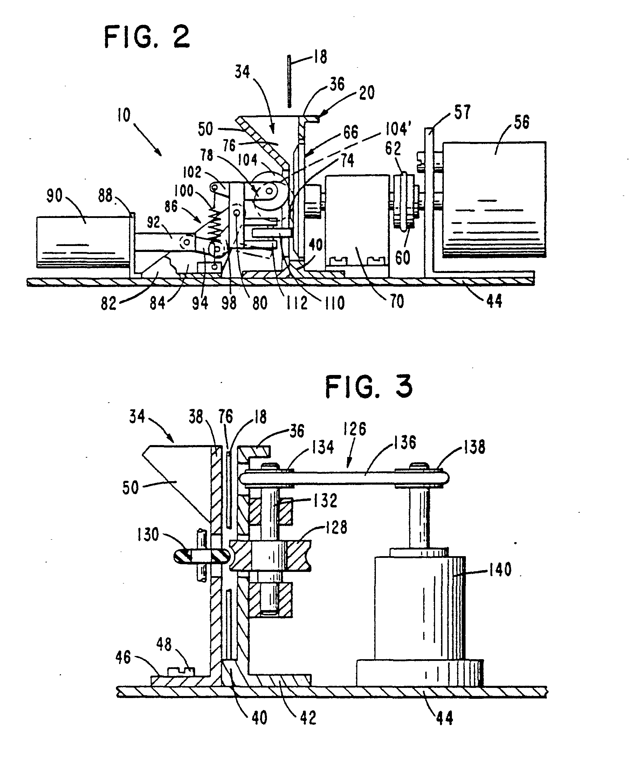

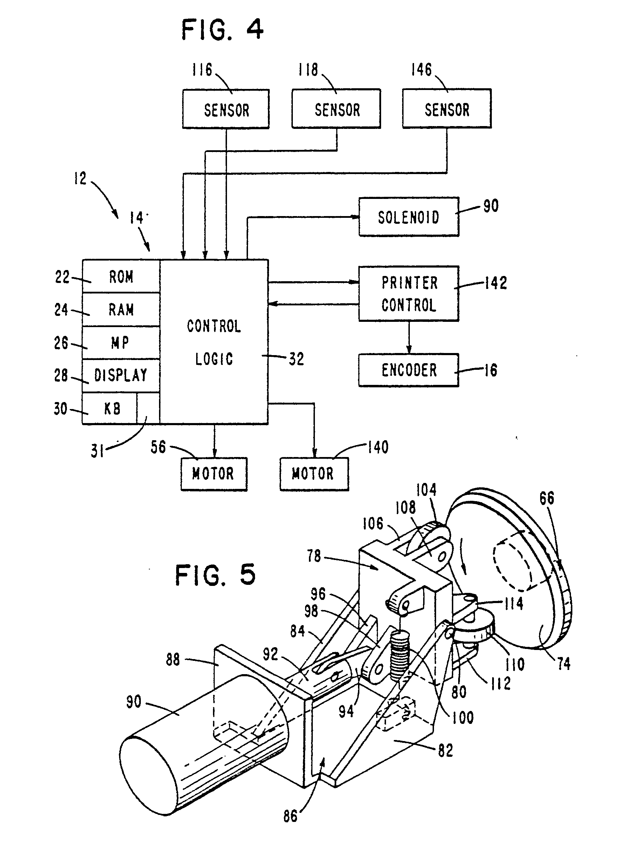

The apparatus 10 may be incorporated in a terminal 12, only portions of which are shown diagrammatically in Fig. 4. The terminal 12 includes a control means 14 and a printer or encoder 16. One of the functions of the encoder 16, also shown in Fig. 1, is to print or encode certain data on a document or sheet like 18 (Figs. 2 and 3) which is moved along a guiding means or track designated generally as 20. The documents or sheets may be bank checks or invoices, for example, which are to have certain monetary amounts printed or encoded thereon in characters or bar codes, for example, at the encoder 16.

The control means 14 for controlling the operation of the terminal 12 may be conventional and includes a read only memory (ROM) 22 (in which instructions or programs are stored), a random access memory (RAM) 24, a processor such as a microprocessor (MP) 26, a display 28 for communicating with a user of the terminal 12, a keyboard (KB) 30 for entering data, and conventional control logic 32 which contains the appropriate logic circuitry and interfaces which enable the terminal 12 to function as what is considered an "intelligent" terminal. Because the control means 14 may be conventional, it need not be described in any further detail herein.

In a typical use of the apparatus 10, an operator of the terminal 12 enters on the keyboard 30 (Fig. 4) the monetary amount to be applied to or encoded on a document or sheet 18 in the example previously described. The operator then depresses an actuation key 31 on the keyboard 30 to initiate the operation of the apparatus 10, and thereafter, the operator drops the sheet 18 (with the long bottom edge of the sheet lowermost) into a receiving area 34 associated with the track 20 (Fig. 1).

The track 20 (Fig. 1) is made up of a first sidewall 36 and a second side wall 38 as best seen in Fig. 3, for example. The first side wall 36 has a third wall or bottom 40 and a flange 42 to enable it to be secured to the mounting plate 44 of the apparatus 10. The second side wall 38 has a flange 46 to enable it to be secured to the mounting plate 44 by fasteners like 48. The sheet receiving area 34 (Fig. 1) is formed by having a portion 50 of the second side wall 38 extend outwardly as shown in Fig. 2. In the embodiment described, the length of the receiving area 34, as viewed from the top as seen in Fig. 1, is about 15 centimeters as measured between corner bends 52 and 54; accordingly, the apparatus 10 handles or receives sheets having a length of 15 centimeters or less with a height of about 10 centimeters as viewed in Fig. 3. Naturally, these dimensions could be changed to suit particular applications.

When the actuation key 31 (Fig. 4) is actuated, it energizes the motor 56 via the control logic 32. The motor 56 is part of the apparatus 10 shown in Figs. 1 and 2, and is secured to the mounting plate 44 via a bracket 57.

The motor 56 has an output pulley 58 which is drivingly coupled to pulley 60 by an endless belt 62, with the motor 56 being operated to move or drive the belt 62 in the direction of arrow 64.

The apparatus 10 also includes a rotatable member which will be referred to hereinafter as disc 66. Disc 66 has one end of a shaft (Fig. 1) secured thereto, and the shaft 68 extends therefrom and is mounted in a bearing support 70 which is secured to the mounting plate 44 by fasteners 72. The remaining end of the shaft 68 has the pulley 60 secured thereto to enable the shaft 68 and the disc 66 to be rotated by the motor 56.

The disc 66 (Figs. 1 and 2) is inserted through an opening in the sidewall 36 and is positioned so that its circular, planar surface 74 extends about halfway into the space 76 between the side walls 36 and 38. When the motor 56 is energized, the disc 66 and its planar surface 74 are rotated in a counterclockwise direction as viewed from the direction A shown in Fig. 1.

The apparatus 10 also includes a moveable or toggle member designated generally as 78 and shown in Figs. 1, 2 and 5. The toggle member 78 has short axles like 80 (Fig. 5) extending from opposed sides thereof, and these axles are pivotally supported in arms 82 and 84 of a mounting bracket 86 which is secured to the mounting plate 44. The mounting bracket 86 also has an upturned flange 88 in which a solenoid 90 is secured. The operating plunger 92 (Fig. 5) of the solenoid 90 is pivotally joined to one end of a link 94 whose remaining end is positioned between the supports 96 and 98 and is pivotally joined thereto. The supports 96 and 98 extend from one side of the toggle member 78 as is best shown in Fig. 5.

When the solenoid 90 is energized by the control means 14, the toggle member 78 is pivoted about its axles 80 in a clockwise direction as viewed in Fig. 2 to a first position with regard to the disc 66. When the solenoid 90 is de-energized, a tension spring 100, having one end connected to the mounting bracket 86 and the remaining end connected to an extension 102 on the toggle member 78, causes the toggle member 78 to pivot about its axles 80 in a counterclockwise direction to a second position shown in Figs. 1 and 2.

The toggle member 78 has a first member or roller 104 thereon, with the roller 104 being rotatably mounted between supports 106 and 108, as is best shown in Fig. 5, and with the axis of rotation of the roller 104 being horizontal. The toggle member 78 similarly has a second member or roller 110 thereon, with the roller 110 being rotatably mounted between supports 112 and 114. The axis of rotation of roller 110 is vertical as viewed in Fig. 5.

When the toggle member 78 is moved to the first position by energizing the solenoid 90, the first member or roller 104 advances towards the surface 74 of disc 66 to engage it as shown by the dashed outline 104' of the roller 104 in Fig. 2, and the second member or roller 110 pivots away from the disc 66. A document or sheet 18, which is fed manually downwardly (as viewed in Fig. 2) into the sheet receiving area 34, will be driven or moved downwardly (in a tangential manner) towards the bottom 40 of the track 12 due to the rotation of disc 66 and roller 104 which functions as a pinch roller. As a sheet 18 is moved downwardly, its lower edge will be detected by sensors 116 and 118 (Fig. 1) which are positioned along one side of the track 20 so as to provide a signal when the lower edge of the sheet 18 contacts the bottom 40 (Fig. 2) of the track 20. The sensors 116 and 118 are conventional, and have sources of light 120 and 122, respectively, located on the opposite side of the track 20. The sensors 116 and 118 each provide a signal when the light thereto is interrupted by the lower edge of a sheet 18. The outputs of the sensors 116 and 118 are suitably ANDed by the control logic 32 to provide a signal which de-energizes solenoid 90, as the sheet is now positioned with its lower edge contacting the bottom 40 of the track 20.

When the solenoid 90 is de-energized, the toggle member 78 is pivoted to the second position (as shown in full lines in Figs. 1 and 2) through the action or spring 100. In this second position, the roller 110 forces the sheet 18 into engagement with the surface 74 of the rotating disc 66 to move or feed the sheet 18 in a downstream direction in track 20, as indicated by arrow 124 in Fig. 1.

From what has been just described, it should be noted that a document or sheet 18 is first moved downwardly towards the bottom 40 of the track 20, and thereafter, it is moved in a downstream direction (arrow 124). This orienting and then moving or feeding of the sheet 18 is accomplished within a very short distance as measured along the downstream direction so as to enable the sheet 18 is to be properly oriented with the lower edge thereof contacting the bottom 40 of the track 20 when the sheet reaches the encoding station 16 (Fig. 1).

Certain modifications of the apparatus 10 are possible to meet particular applications. For example, the roller 104 may be located (on the toggle member 78) further to the left (as viewed in Fig. 1) relative to the rotating disc 66 to increase the velocity of movement of the sheet 18 in the downward direction as previously described. Correspondingly, the roller 110 may be located (on the toggle member 78) further downwardly (as viewed in Fig. 2) relative to the rotating disc 66 to increase the velocity of movement of the sheet 18 in the downstream direction (in the track 20) as indicated by arrow 124. To accomplish this flexibility, the supports 106 and 108 (Fig. 5) for roller 104 and the supports 112 and 114 for roller 110 may be adjustably mounted on the toggle member 78. In the embodiment described, the disc 66 has a diameter of 48 mm. and it is rotated at a velocity of 600 revolutions per minute. The roller 104 is positioned to effect a downward velocity of about 1300 mm. per second, and the roller 110 is positioned to effect a velocity in the downstream direction of about 1300 mm. per second. The rollers 104 and 110 are made of a plastic material like urethane, and the surface 74 of disc 66 is made of stainless steel. Naturally, the velocities and materials can be changed to suit particular applications.

Another modification possible is that the sensors 116 and 118 (Fig. 1) may be replaced by a single sensor (not shown) which is positioned below the roller 104 as viewed in Fig. 1. Generally, when the center of the lower edge of a sheet like 18 is located on the bottom 40 of the track, it means that the lower edges of the sheet near its leading and trailing edges also contact the bottom 40. However, using two sensors 116 and 118 provides more positive detection.

Fig. 3 shows a conventional feed mechanism 126 for moving or feeding the sheets like 18 in the downstream direction along track 20. The feed mechanism 126 includes a drive roller 128 which is rotatably mounted on the side wall 36 to cooperate with a pinch roller 130 which is rotatably mounted on the side wall 38 and is resiliently biased to move towards the drive roller 128 as is conventionally done. The driving shaft 132 of drive roller 128 has a driving pulley 134 fixed thereto to be rotated by an endless belt 136 which is coupled to the driving pulley 138 of motor 140. Drive roller 128 is rotated in a counterclockwise direction (as viewed in Fig. 1) by the motor 140.

The encoder 16 (Fig. 1) usually has its own conventional feed means 17 (shown in dashed outline as a drive roller) associated therewith to move the sheets like 18 at the appropriate rate to effect encoding of the sheet at the endoder 16. The feed mechanism 126 shown in Fig. 3 is of the "soft" variety which means that the coefficient of friction between the drive roller 128 and the pinch roller 130 is such as to enable drive roller 128 to rotate or "slip" on the surface of sheet 18 as, for example, the feed means 17 at the encoder 16 moves the sheet 18 at the encoding rate of encoder 16 which usually is slower than the feeding rate provided by drive rollers like 128.

A conventional printer control 142 (Fig. 4) is used to format the data to be encoded by the encoder 16. A source of light 144 (Fig. 1) located on one side of track 20 and its associated light sensor 146 located on the opposite side of the track are used to inform the control means 14 that the trailing edge of a sheet is out of the encoder 16, and that the next sheet may be hand fed into the sheet receiving area 34 (Fig. 1) to repeat the process as described. The encoder 16 may have its own sensors (not shown) similar to sensor 146, for example, which are positioned along the track 20 to detect the leading edge, for example, of a sheet 18 thereat so as to initiate the encoding or printing. Because this aspect is conventional, it need not be described in any further detail.

**Claims**

1. A sheet feeding apparatus including transport means for moving a sheet in a first direction and thereafter moving the sheet in a second direction transverse to said first direction, said transport means including movable means movable between first and second positions and having a first member to cooperate with drive means to move the sheet in said first direction when said movable means is in its first position, and also having a second member to cooperate with drive means to move the sheet in said second direction when said movable means is in its second position, characterized in that said drive means comprises a rotatable member (66) having a rotatable substantially planar surface (74) with which said first and second members (104, 110) are arranged to cooperate to move the sheet (18).

2. Apparatus according to claim 1, characterized by a track (20) having first (36) and second (38) spaced side walls and a third wall (40) therebetween to form a sheet receiving space (34), the planar surface (74) of said rotatable member (66) being so positioned in said sheet receiving space (34) that, when said rotatable member (66) is rotated and cooperates with said first member (104), it moves a sheet (18) until an edge thereof contacts said third wall (40), and that, when said rotatable member (66) is rotated and cooperates with said second member (110), it moves the sheet (18) downstream along said track (20).

3. Apparatus according to either claim 1 or 2, characterized in that said rotatable member (66) is a disc and said movable means (78) is a toggle member.

4. Apparatus according to claim 3, characterized in that said first and second members (104, 110) are pinch rollers which are rotably mounted on said toggle member (78) and have their axis of rotation positioned at substantially a right angle to each other.

5. Apparatus according to claim 4, characterized in that said pinch rollers (104, 110) are adjustably mounted on said toggle member (78) and are movable thereon relative to the axis of rotation of said disc (66) thereby to control the velocity of movement of a sheet (18) fed between the planar surface (74) of said disc (66) and one or the other of said pinch rollers (104, 110).

6. Apparatus according to claim 4, characterized in that the planar surface (74) of said disc (66) is made of stainless steel and said pinch rollers (104, 110) are made of a plastic material.

7. Apparatus according to claim 2, characterized by an actuator (90) for moving said movable means (78) to said first position when said actuator (90) is energized, and by resilient means (100) for moving said movable means (78) to said second position when said actuator (90) is deenergized.

8. Apparatus according to claim 7, characterized by sensing means (116, 120; 118, 122) for sensing when an edge of a sheet (18) is positioned at said third wall (40) to produce a signal which deenergizes said actuator (90), permitting said resilient means (100) to move said movable means (78) to said second position.

## Revendications

1. Appareil d'alimentation feuille à feuille comprenant des moyens de transport destinés à déplacer une feuille dans une première direction, puis à déplacer la feuille dans une seconde direction transversale à ladite première direction, lesdits moyens de transport comprenant des moyens mobiles entre des première et seconde positions et comportant un premier élément destiné à coopérer avec des moyens d'entraînement pour déplacer la feuille dans ladite première direction lorsque lesdits moyens mobiles sont dans leur premiére position, et comportant également un second élément destiné à coopérer avec des moyens d'entraînement pour déplacer la feuille dans ladite seconde direction lorsque lesdits moyens mobiles sont dans leur seconde position, caractérisé en ce que lesdits moyens d'entraînement comprennent un élément rotatif (66) présentant une surface rotative sensiblement plane (74) avec laquelle lesdits premier et second éléments (104, 110) sont agencés de façon à coopérer pour déplacer la feuille (18).

2. Appareil selon la revendication 1, caractérisé par une piste (20) comportant des première (36) et deuxième (38) parois latérales espacées et une troisième paroi (40) disposée entre elles pour former un espace (34) de réception de feuilles, la surface plane (74) dudit élément rotatif (66) est étant positionnée dans ledit espace (34) de réception de feuilles de manière que, lorsque ledit élément rotatif (66) est mis en rotation et qu'il coopère avec ledit premier élément (104), il déplace une feuille (18) jusqu'à ce qu'un bord de celle-ci entre en contact avec ladite troisième paroi (40) et que, lorsque ledit élément rotatif (66) est mis en rotation et coopère avec ledit second élément (110), il déplace la feuille (18) vers l'aval le long de ladite piste (20).

3. Appareil selon l'une des revendications 1 ou 2, caractérisé en ce que ledit élément rotatif (66) est un disque et ledit moyen mobile (78) est un élément à genouillère.

4. Appareil selon la revendication 3, caractérisé en ce que lesdits premier et second éléments (104, 110) sont des rouleaux presseurs qui sont montés de façon à pouvoir tourner sur ledit élément à genouillère (78) et dont les axes de rotation sont disposés à peu près perpendiculairement entre eux.

5. Appareil selon la revendication 4, caractérisé en ce que lesdits rouleaux presseurs (104, 110) sont montés de façon réglable sur ledit élément à genouillère (78) et sont mobiles sur celui-ci par rapport à l'axe de rotation dudit disque (66) afin de régler la vitesse du mouvement d'une feuille (18) avancée entre la surface plane (74) dudit disque (66) et l'un ou l'autre desdits rouleaux presseurs (104, 110).

6. Appareil selon la revendication 4, caractérisé en ce que la surface plane (74) dudit disque (66) est réalisée en acier inoxydable et lesdits rouleaux presseurs (104, 110) sont réalisées en matière plastique.

7. Appareil selon la revendication 2, caractérisé par un actionneur (90) destiné à déplacer lesdits moyens mobiles (78) vers ladite première position lorsque ledit actionneur (90) est excité, et par des moyens élastiques (100) destinés à déplacer lesdits moyens mobiles (78) vers ladite seconde position lorsque ledit actionneur (90) est désexcité.

8. Appareil selon la revendication 7, caractérisé par des moyens de détection (116, 120; 118, 122) destinés à détecter lorsqu'un bord d'une feuille (18) est positionné à ladite troisième paroi (40) afin de produire un signal qui désexcite ledit actionneur (90), permettant auxdits moyens élastiques (100) de déplacer lesdits moyens mobiles (78) vers ladite seconde position.

## Patentansprüche

1. Blattfördergerät mit einer Transportvorrichtung zum Bewegen eines Blattes in einer ersten Richtung und dann zum Bewegen des Blattes in einer zweiten Richtung quer zur ersten Richtung, wobei die Transportvorrichtung eine bewegbare Vorrichtung aufweist, die zwischen

**0 130 975**

einer ersten und zweiten position bewegbar ist und ein erstes Glied, das mit Antriebesmitteln zum Bewegen des Blattes in der ersten Richtung zusammenarbeitet, wenn die bewegbare Vorrichtung sich in der ersten Position befindet, und auch ein zweites Glied aufweist, das mit den Antriebsmitteln zusammenarbeitet, um das Blatt in der zweiten Richtung zu bewegen, wenn sich die bewegbare Vorrichtung in ihrer zweiten Position befindet, dadurch gekennzeichnet, daß die Antriebsmittel ein rotierbares Glied (66) mit einer rotierbaren, im wesentlichen planaren Oberfläche (74) aufweisen, mit der das erste und zweite Glied (104, 110) zusammenarbeiten kann, um das Blatt (18) zu bewegen.

2. Gerät nach Anspruch 1, gekennzeichnet durch eine Bahn (20) mit einer ersten (36) und einer zweiten (38) beabstandeten Seitenwand und einer dritten Wand (40) dazwischen zum Bilden eines Blattaufnahmeraumes (34), wobei die planare Oberfläche (74) des rotierbaren Gliedes (66) derart in dem Blattaufnahmeraum (34) angebracht ist, daß bei Rotation des rotierbaren Gliedes (66) und seinem Zusammenarbeiten mit dem ersten Glied (104) es ein Blatt (18) bewegt, bis eine Kante desselben in Kontakt mit der dritten Wand (40) kommt, und daß bei Rotation des rotierbaren Gliedes (66) une seinem Zusammenarbeiten mit dem zweiten gleid (110) es das Blatt (18) stromabwärts längs der Bahn (20) bewegt.

3. Gerät entweder nach Anspruch 1 oder 2, dadurch gekennzeichnet, daß das rotierbare Glied (66) eine Scheibe ist und daß die bewegbare Vorrichtung (78) ein Taumelglied ist.

4. Gerät nach Anspruch 3, dadurch gekenn-

zeichnet, daß das erste und zweite Glied (104, 110) Andrückrollen sind, die rotierbar an dem Taumelglied (78) angebracht sind, wobei ihre Rotationsachsen im wesentlichen in rechtem Winkel zueinander angeordnet sind.

5. Gerät nach Anspruch 4, dadurch gekennzeichnet, daß die Andrückrollen (104, 110) justierbar an dem Taumelglied (78) angebracht sind und daß sie darauf bewegbar sind relativ zur Rotationsachse der Scheibe (66), um die Geschwindigkeit der Bewegung eines Blattes (18) zu steuern, das zwischen der planaren Oberfläche (74) der Scheibe (66) und der einen oder anderen Andrückrolle (104, 110) gefördert wird.

6. Gerät nach Anspruch 4, dadurch gekennzeichnet, daß die planare Oberfläche (74) der Scheibe (66) aus rostfreiem Stahl und die Andrückrollen (104, 110) aus Kunststoffmaterial hergestellt sind.

7. Gerät nach Anspruch 2, gekennzeichnet durch ein Betätigungsglied (90) zum Bewegen der bewegbaren Vorrichtung (78) in die erste Position, wenn das Betätigungsglied (90) erregt wird, und durch federnde Mittel (100) zum Bewegen der bewegbaren Vorrichtung (78) in die zweite Position, wenn das Betätigungsglied (90) aberregt wird.

8. Gerät nach Anspruch 7, gekennzeichnet durch Abfühlmittel (116, 120; 118, 122) zum Abfühlen, wenn eine Kante eines Blattes (18) an der dritten Wand (40) positioniert ist, um ein Signal zu erzeugen, das das Betätigungsglied (90) aberregt, wodurch die federnden Mittel (100) die bewegbare Vorrichtung (78) in die zweite Position bewegen Können.

FIG. I

0 130 975

# FIG. 2

# FIG. 3

# FIG. 4

# FIG. 5